# EUROPEAN PATENT SPECIFICATION

(11) **EP 0 650 325 B1**
(45) Date of publication and mention of the grant of the patent: **15.01.1997**
(21) Application number: 93914914.2
(22) Date of filing: 12.07.1993
(51) Int. Cl.: A01N 53/00

(54) **PESTICIDAL COMPOSITIONS**
PESTIZIDE ZUSAMMENSETZUNG
COMPOSITIONS PESTICIDES

(30) Priority: 17.07.1992 EP 92402087
(43) Date of publication of application: 03.05.1995
(73) Proprietor: ZENECA LIMITED, London W1Y 6LN (GB); SOPRA s.a., F-78148 Vélizy-Villacoublay (FR)
(72) Inventor: FLECHEL, Brigitte, F-27300 Bernay (FR)
(74) Representative: Bishop, Nigel Douglas
(86) International application number: GB9301445
(87) International publication number: WO9402020

(56) References cited:
- EP-A- 0 149 051
- EP-A- 0 237 227
- WO-A-91/01640

## Description

This invention relates to novel pesticidal compositions.

The insecticidal product lambda-cyhalothrin has previously been formulated in various ways, including for example emulsifiable concentrates, suspension concentrates, and aerosol formulations, the exact formulation being chosen in relation to the type and location of the pests intended to be controlled. Previously emulsifiable concentrates have been made and used very successfully for the control of lepidopterous and aphid pests in various crops, such as cereals, vines and sunflowers.

In recent years there has been a desire to decrease the costs of applying pesticides to crops by combining the application of two or more products, for example an insecticide and a fungicide, in a single spraying operation. This is carried out by the applicator mixing together the concentrated insecticide and concentrated fungicide in the same spray tank and diluting the mixture with water until the correct concentration of the active ingredients is obtained.

The existing emulsifiable concentrate formulation of lambda-cyhalothrin was not in all respects suitable for this operation because it was incompatible with the formulations of the principal fungicides which the applicator would wish to use. This incompatability leads to the the separation of the components of the mixture in the spray tank and spray head and results in poor application to the crops being treated. It was therefore desired to devise an emulsifiable concentrate having the required compatability with preformulated compositions of fungicides.

In addition it was desired to improve the overall safety of the compositions by reducing the risks of accidental ignition of the flammable components during the transfer of the concentrate into the spray tank. It was also desired to reduce the risks of inadvertant confusion with other pesticide products having the same general appearance, which could lead to the wrong product being put into the spray tank.

According to the present invention there is provided a novel pesticidal composition in the form of an emulsifiable concentrate comprising as active ingredient the insecticide lambda-cyhalothrin in combination with an emulsifier and a diluent characterised in that the emulsifier comprises a blend of anionic and non-ionic surfactants and the diluent is a solvent blend consisting mainly of alkylnaphthalenes and having a flash point greater than 83°C, and optionally comprising a oil-soluble dyestuff.

Lambda-cyhalothrin is the ISO approved common name of the insecticidal active ingredient consisting of the enantiomeric pair of isomers S-alpha-cyano-3-phenoxybenzyl 1R,cis-3-(Z-2-chloro-3,3,3-trifluroprop-1-en-1-yl)-2,2-dimethylcyclopropane carboxylate and R-alpha-cyano-3-phenoxybenzyl 1S,cis-3-(Z-2-chloro-3,3,3-trifluoroprop-1-en-1-yl)-2,2-dimethylcyclopropane carboxylate in racemic proportions. Products comprising lambda-cyhalothrin intended for use in agriculture or horticulture are usually sold under the Registered Trade Mark KARATE.

The emulsifiers which are useful in the invention compositions comprise a blend of anionic and non-ionic surfactants. The anionic surfactant may be, for example, salts of sulphonic acids such as calcium dodecylbenzene sulphonate, and the non-ionic surfactants may be alkylphenol ethoxylates, which are condensates of alkylphenols (e.g. C₆-C₁₂ alkylphenols) with up to 20 molecules of ethylene oxide, preferably 5 to 15 molecules.

A suitable emulsifier for use in the compositions is that sold under the Registered Trade Mark TENSIOFIX LS (obtainable from OmniChem S.A., Tensiofix Division, Industrial Research Park, B-1348 Louvain-La-Neuve, Belgium), and a suitable diluent is that sold under the Trade Mark SOLVESSO 200. Where an oil soluble dyestuff is included it can be for example 1,4-bis-(4-methylphenylamino)-anthraquinone, which is sold under the Registered Trade Mark WAXOLINE GREEN GFW which imparts a green coloration to the composition.

Preferably the composition comprises from 20 to 80 grams per litre of the lambda-cyhalothrin, and from 50 to 150 grams per litre of the emulsifier. In a more preferred form the ratio (w/w) of emulsifier to lambda-cyhalothrin is within the range 0.75 to 2.5.

Where a dyestuff is present it is preferably used at a rate within the range 0.001 to 0.5 grams per litre.

The compositions of the invention exhibit the following advantages over the previously described and used emulsifiable concentrates of lambda-cyhalothrin:
- They are fully compatible with concentrated compositions of various commercially available agricultural fungicides, such as for example, tebuconazole, which is sold under the Registered Trade Mark HORIZON;
- they exhibit less risk of accidental ignition;
- where they contain a dyestuff they are less likely to be confused with other products.

In use the compositions of the invention are applied to crops to combat insect pests thereon by dilution with water in a spray tank to obtain a composition containing the recommended concentration of lambda-cyhalothrin for use on that particular crop. Where it is desired to spray a composition comprising not only lambda-cyhalothrin but also a fungicidal product then a preformulated fungicide in the form of an emulsifiable concentrate or suspension concentrate is also added to the spray tank in an amount such that after dilution the relative concentrations of the lambda-cyhalothrin and the fungicide are correct for spray application to the articular crop to be treated.

In addition to the fungicidal products based in tebuconazole, other products include emulsifiable concentrates or suspension concentrates of, for example, propiconazole, cyproconazole, penconazole, hexaconazole, prochloraz, and flutriafol.

The following Examples illustrate pesticidal compositions according to the invention. In the Examples the ingredients were blended together in the proportions stated to obtain an emulsifiable concentrate:

| EXAMPLE 1 | |
|---|---|
| Lambda-cyhalothrin | 25 g/l |
| TENSIOFIX LS | 70 g/l |
| SOLVESSO 200 | to 1 litre |

| EXAMPLE 2 | |
|---|---|
| Lambda-cyhalothrin | 50 g/l |
| TENSIOFIX LS | 120 g/l |
| WAXOLINE GREEN GFW | 0.015 g/l |
| SOLVESSO 200 | to 1 litre |

| EXAMPLE 3 | |
|---|---|
| Lambda-cyhalothrin | 75 g/l |
| TENSIOFIX LS | 140 g/l |
| WAXOLINE GREEN GFW | 0.020 g/l |
| SOVLESSO 200 | to 1 litre |

| EXAMPLE 4 | |
|---|---|
| Lambda-cyhalothrin | 50 g/l |
| TENSIOFIX LS | 100 g/l |
| WAXOLINE GREEN GFW | 0.010 g/l |
| SOLVESSO 200 | to 1 litre |

| EXAMPLE 5 | |
|---|---|
| Lambda-cyhalothrin | 50 g/l |
| TENSIOFIX LS | 85 g/l |
| SOLVESSO 200 | to 1 litre |

| EXAMPLE 6 | |
|---|---|
| Lambda-cyhalothrin | 25 g/l |
| TENSIOFIX LS | 50 g/l |
| WAXOLINE GREEN GFW | 0.005 g/l |
| SOLVESSO 200 | to 1 litre |

## Claims

1. A pesticidal composition in the form of an emulsifiable concentrate comprising as active ingredient the insecticide lambda-cyhalothrin in combination with an emulsifier and a diluent characterised in that the emulsifier is a blend of anionic and non-ionic surfactants and the diluent is a solvent blend consisting mainly of alkylnaphthalenes having a flash point greater than 83°C, and optionally comprising a oil-soluble dyestuff.

2. A composition according to claim 1 in which the amionic surfactant is selected from salts of sulphonic acids and the non-ionic surfactant is selected from alkylphenol alkoxylates.

3. A composition according to Claim 1 which comprises from 20 to 80 grams per litre of the lambda-cyhalothrin, and from 50 to 150 grams per litre of the emulsifier.

4. A composition according to Claim 3 in which the ratio (w/w) of emulsifier to lambda-cyhalothrin is within the range 0.75 to 2.5.

5. A composition according to claim 1 where a dyestuff is present.

6. A composition according to Claim 5 where the dyestuff is used at a rate within the range 0.001 to 0.5 grams per litre.

7. A method of combating insect and fungal pests in an agricultural or horticultural crop which comprises mixing a composition as defined in claim 1 with a concentrated composition of a fungicide in a spray tank with sufficient water to dilute the mixture to the recommended concentration with respect to the active ingredients and spraying the mixture on the crop.

8. A method according to Claim 7 wherein the fungicide is tebuconazole, propiconazole, cyproconazole, penconazole, hexaconazole, prochloraz and flutriafol.

## Patentansprüche

1. Pesticide Zusammensetzung in Form eines emulgierbaren Konzentrats, die als wirksamen Inhaltsstoff das Insecticid λ-Cyhalothrin in Kombination mit einem Emulgiermittel und einem Streckmittel enthält,
dadurch **gekennzeichnet,**
daß das Emulgiermittel ein Gemisch aus anionischen und nicht-ionischen grenzflächenaktiven Mitteln ist und das Streckmittel ein Lösungsmittelgemisch ist, das hauptsächlich aus Alkylnaphthalinen mit einem Flammpunkt von höher als 83°C besteht, und die gegebenenfalls einen öllöslichen Farbstoff enthält.

2. Zusammensetzung nach Anspruch 1, wobei das anionische grenzflächenaktive Mittel unter Salzen von Sulfonsäuren ausgewählt ist und das nicht-ionische grenzflächenaktive Mittel unter Alkylphenolalkoxylaten ausgewählt ist.

3. Zusammensetzung nach Anspruch 1, die 20 bis 80 g/l λ-Cyhalothrin enthält und 50 bis 150 g/l Emulgiermittel.

4. Zusammensetzung nach Anspruch 3, wobei das Verhältnis (G/G) λ-Cyhalothrin zu Emulgiermittel im Bereich von 0,75:2,5 liegt.

5. Zusammensetzung nach Anspruch 1, wobei ein Farbstoff vorhanden ist.

6. Zusammensetzung nach Anspruch 5, wobei der Farbstoff in einer Menge im Bereich von 0,001 bis 0,5 g/l verwendet wird.

7. Verfahren zur Bekämpfung von Insekten- und Pilzschädlingen von landwirtschaftlichen oder gartenbaulichen Kulturpflanzen, bei dem eine in Anspruch 1 definierte Zusammensetzung mit einer konzentrierten Zusammensetzung eines Fungicids in einem Sprühtank mit ausreichend Wasser so vermischt wird, daß das Gemisch auf die empfohlene Konzentration hinsichtlich der wirksamen Inhaltsstoffe verdünnt wird, und das Gemisch auf die Kulturpflanzen gesprüht wird.

8. Verfahren nach Anspruch 7, wobei das Fungicid Tebuconazol, Propiconazol, Cyproconazol, Penconazol, Hexaconazol, Prochloraz und Flutriafol ist.

## Revendications

1. Composition pesticide sous forme d'un concentré émulsionnable, comprenant comme ingrédient actif l'insecticide lambda-cyhalothrine en association avec un émulsionnant et un diluant, caractérisée en ce que l'émulsionnant est un mélange d'agents tensio-actifs anioniques et non ioniques et le diluant est un mélange de solvants consistant principalement en alkylnaphtalènes ayant un point d'éclair supérieur à 83°C, et comprenant facultativement un colorant soluble dans l'huile.

2. Composition suivant la revendication 1, dans laquelle l'agent tensio-actif anionique est choisi parmi des sels d'acides sulfoniques et l'agent tensio-actif non ionique est choisi parmi des alkoxylates d'alkylphénols.

3. Composition suivant la revendication 1, qui comprend 20 à 80 grammes par litre de la lambda-cyhalothrine et 50 à 150 grammes par litre de l'émulsionnant.

4. Composition suivant la revendication 3, dans laquelle le rapport (en poids/poids) de l'émulsionnant à la lambda-cyhalothrine est dans les limites de la plage de 0,75 à 2,5.

5. Composition suivant la revendication 1, dans laquelle une matière colorante est présente.

6. Composition suivant la revendication 5, dans laquelle la matière colorante est utilisée à une concentration comprise dans la plage de 0,001 à 0,5 gramme par litre.

7. Procédé pour combattre des insectes et des champignons parasites des plantes en agriculture ou en horticulture, qui comprend le mélange d'une composition telle que définie dans la revendication 1 avec une composition concentrée d'un fongicide dans une citerne de pulvérisation avec suffisamment d'eau pour diluer le mélange à la concentration recommandée en rapport avec les ingrédients actifs et la pulvérisation du mélange sur les plantes cultivées.

8. Procédé suivant la revendication 7, dans lequel le fongicide est le tébuconazole, le propiconazole, le cyproconazole, le penconazole, l'hexaconazole, le prochloraz et le flutriafol.
